**Europäisches Patentamt**

(19) **European Patent Office**

**Office européen des brevets**

(11) Veröffentlichungsnummer: **0 347 786 B1**

(12) **EUROPÄISCHE PATENTSCHRIFT**

(45) Veröffentlichungstag der Patentschrift:
29.05.91 Patentblatt 91/22

(51) Int. Cl.⁵: **F16H 7/24**

(21) Anmeldenummer: **89111047.0**

(22) Anmeldetag: **19.06.89**

(54) **Verfahren und Vorrichtung zum Montieren von Riemen an Riementrieben.**

(30) Priorität: 24.06.88 DE 3821369

(43) Veröffentlichungstag der Anmeldung:
27.12.89 Patentblatt 89/52

(45) Bekanntmachung des Hinweises auf die
Patenterteilung:
29.05.91 Patentblatt 91/22

(84) Benannte Vertragsstaaten:
DE ES FR GB IT

(56) Entgegenhaltungen:
DE-A- 3 515 605
DE-C- 3 039 215
US-A- 3 061 886
PATENT ABSTRACTS OF JAPAN, Band 10, Nr.
73 (M-463)[2130], 22. März 1986; & JP-A-60 215
145 (MATSUSHITA DENKI SANGYO K.K.) 28-
10-1985

(73) Patentinhaber: AUDI AG
Auto-Union-Strasse 1 Postfach 220
W-8070 Ingolstadt (DE)

(72) Erfinder: Hall, Erich
Am Fort 90 a
W-8071 Wettstetten (DE)
Erfinder: Schörwerth, Helmut
Annette-Kolb-Strasse 50
W-8070 Ingolstadt (DE)

(74) Vertreter: Le Vrang, Klaus
c/o AUDI AG, Abteilung I/EQA Postfach 2 20
W-8070 Ingolstadt (DE)

## Beschreibung

Die Erfindung betrifft ein Verfahren und eine Vorrichtung zum Montieren von Riemen an Riementrieben, insbesondere von Keilriemen zum Antrieb von Zusatzaggregaten an Brennkraftmaschinen, gemäß dem Oberbegriff des Patentanspruches 1.

Bei Riementrieben mit Riemen (Flachriemen, Keilriemen, Zahnriemen ect.) aus elastischem Material ist es bekannt, daß diese nach der Erstmontage einer gewissen Setzung (Längung) unterliegen. Dies führt dazu, daß die bei der Erstmontage eingestellte Vorspannung relativ schnell abfällt und – sofern nicht frühzeitig nachgespannt wird – ein Durchrutschen des Riemens einsetzt.

Es ist nicht möglich, dieses "Setzen" des Riemens auszugleichen, indem man die Vorspannung bei der Erstmontage entsprechend erhöht. Dies führt nämlich zu Überbelastungen im gesamten Riementrieb und zu Riemengeräuschen. Ein Nachspannen nach der ersten Setzung ist umständlich und oft mit erheblichen Zusatzarbeiten (Abbau eines Riemenschutzes ect.) verbunden. Bei Brennkraftmaschinen in Kraftfahrzeugen mit Riementrieben beispielsweise zum Antrieb des Generators liegt dieses frühzeitige Nachspannen auch entgegen dem Bestreben nach langen Wartungsintervallen.

Durch die gattungsgemäße DE-A-35 15 605 ist es zwar bekannt, den am Riementrieb montierten Riemen statisch vorzustrecken, indem eine Vorrichtung mit einem fluidbetätigten Spannzylinder mehrmals eine überhöhte Vorspannung erzeugt, bevor dann die vorgegebene Spannung eingestellt wird. Dabei kann es jedoch so sein, daß die unmittelbar mit den Riemenscheiben in Kontakt befindlichen Riemenabschnitte aufgrund der Reibung zwischen den Rienmenflanken und den Keilrillen eine geringere Zugspannung erfahren.

Aufgabe der Erfindung ist es, ein Verfahren aufzuzeigen, bei dem mit geringem Mehraufwand im Bereich der Erstmontage ein frühzeitiges Nachspannen des Riemens entfallen kann. Ferner soll eine geeignete Vorrichtung zur Durchführung des Verfahrens geschaffen werden.

Die verfahrensgemäße Aufgabe wird mit den kennzeichnenden Merkmalen des Patentanspruches 1 gelöst. Es wird somit eine Einlaufvorrichtung vorgeschlagen, auf der der Riemen vor seiner Erstmontage am Riementrieb problemlos montierbar ist und dort eine definierte Zeit bei einer definierten Vorspannung betrieben wird. Dieser Einlaufbetrieb bewirkt eine erste Setzung des Riemens, so daß dieser "spannungsstabiler" ist und nach seiner Erstmontage über einen längeren Zeitraum eine ein Durchrutschen ausschließende Vorspannung beibehält. Der Riemen wird unmittelbar nach dem Entnehmen aus der Einlaufvorrichtung montiert. Es wurde nämlich erkannt, daß sich die Riemen nach deren Einlaufvorgang aufgrund deren ausgeprägter Elastizität wieder zurückbilden bzw. zurückverformen, so daß deren spannungsstabilisierter Zustand wieder abnimmt. Dies wird durch die unmittelbare sozusagen im "warmen" Zustand erfolgende Erstmontage des Riemens an dem korrespondierenden Riementrieb unterbunden. Dadurch werden wesentlich erhöhte Laufzeiten der Riemen im zulässigen Vorspannungsbereich erreicht.

Weitere zweckmäßige Verfahrensparameter sind den Patentansprüchen 2-4 entnehmbar. So hat sich bei Keilriemen, wie sie beispielsweise zum Antrieb von Generatoren an Brennkraftmaschinen in Kraftfahrzeugen üblicherweise verwendet sind, eine Einlaufzeit von ca. 3-5 Minuten bei der üblichen Vorspannung als ausreichend herausgestellt. Bevorzugt soll dabei die Vorspannung über die Einlaufzeit konstant aufrechterhalten werden. Die Drehzahl der Riemenscheiben sollte vorzugsweise zwischen 1000-2000 min.$^{-1}$ und die Durchmesser der Riemenscheiben nicht unter 60 mm liegen, um unter anderem die Walkarbeit des Riemens beim Einlaufvorgang günstig zu beeinflussen.

Insbesondere bei einer serienmäßigen Herstellung der Brennkraftmaschine auf einer Fertigungsstraße bzw. Montagelinie kann gemäß den Merkmalen des Patentanspruches 5 das Verfahren in den Fertigungsablauf einbezogen werden. Dabei wird die Einlaufvorrichtung in die Montagelinie integriert und mit der dortigen Fertigungssteuerung logisch verknüpft. Demnach werden die Riemen in der benötigten Montagefolge der Einlaufvorrichtung zugeführt, in dieser entsprechend betrieben und anschließend unmittelbar zur Erstmontage befördert. Die Riemen werden also in der gleichen Montagefolge, wie sie an dem Fertigungsband montiert werden, durch die Einlaufvorrichtung geschleust.

Eine vorteilhafte, baulich einfache Vorrichtung zur Durchführung des Verfahrens ist in den Patentansprüchen 6-8 angeführt.

Ein Ausführungsbeispiel der Erfindung ist im folgenden mit weiteren Einzelheiten näher erläutert. Die schematische Zeichnung zeigt in

Fig. 1 eine Vorspannungskurve eines herkömmlich montierten Keilriemens und eines nach den erfindungsgemäßen Verfahren montierten Keilriemens für den Antrieb eines Generators an einer Brennkraftmaschine in einem Kraftfahrzeug ;

Fig. 2 eine Einlaufvorrichtung mit einer Antriebsmaschine, einer zweiten drehbar gelagerten Riemenscheibe und einer Spannvorrichtung und

Fig. 3 die Einlaufvorrichtung gemäß Fig. 2 integriert in eine Montagelinie zur Fertigung bzw. Endmontage von Brennkraftmaschinen für Kraftfahrzeuge.

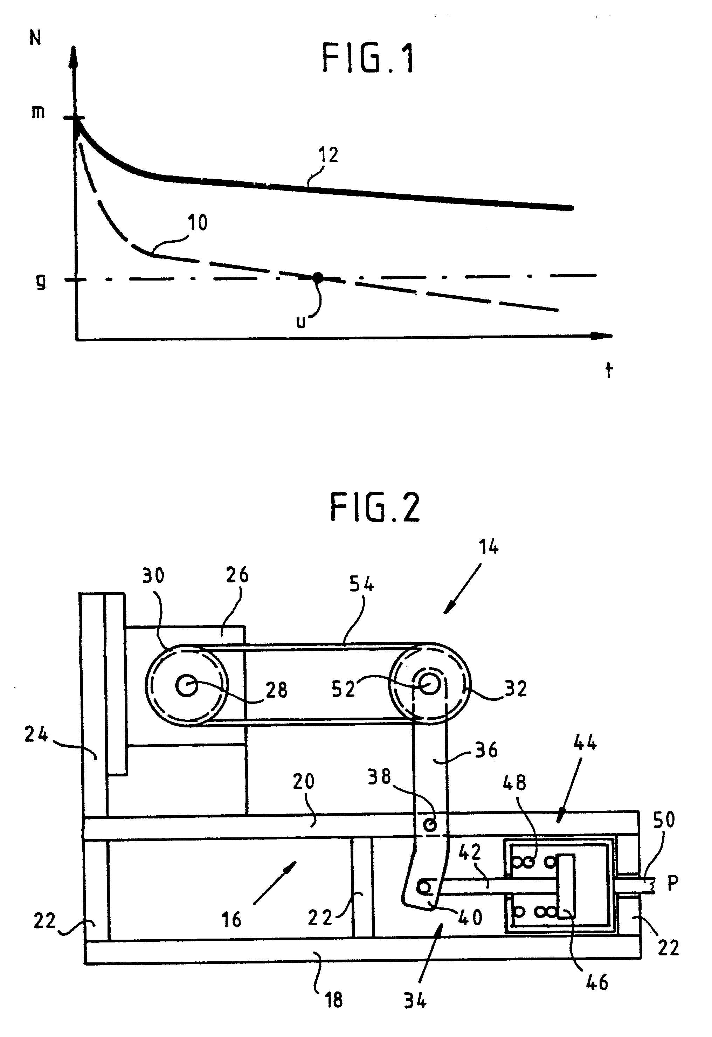

Die Fig. 1 veranschaulicht das Spannungsverhalten von Keilriemen herkömmlicher Bauart, wie sie beispielsweise für einen Antrieb von Generatoren an Brennkraftmaschinen in Kraftfahrzeugen verwendet werden. Die Vorspannung (Trumkraft) in Newton N ist bei der Erstmontage festgelegt auf einen Wert m und nimmt über die Betriebszeit entsprechend den dargestellten Kurven (gestrichelte und ausgezogene Linie) ab. Die strichpunktierte Linie g gibt einen Wert an, unterhalb dem ein Nachspannen des Keilriemens unbedingt erforderlich ist.

Die gestrichelte Linie 10 ist aufgetragen für einen Keilriemen, der ohne Vorbehandlung an dem Riementrieb montiert wurde. Wie ersichtlich ist, nimmt dessen Vorspannung in der anfänglichen Betriebszeit bereits stark ab (steil abfallender Ast) und erfordert schon nach einer relativ kurzen Betriebszeit bei den Punkt u ein Nachspannen. Wird das Nachspannen nicht durchgeführt, sinkt die Vorspannung auf unzulässige Werte ab und der Keilriemen rutscht durch.

Die in durchgezogenen Linien dargestellte Kurve 12 beschreibt die Vorspannung eines spannungsstabilisierten Keilriemens, der vor dessen Erstmontage in der nachbeschriebenen Einlaufvorrichtung drei Minuten bei einer konstanten Vorspannung (Trumkraft) entsprechend dem Wert m bei einer Drehzahl von 1500 min$^{-1}$ und Riemenscheibendurchmessern von 70 mm betrieben und anschließend innerhalb eines Zeitverzuges von ca. 5 Minuten erstmontiert wurde. Wie die Kurve zeigt, ist der nach der ersten Montage unmittelbar einsetzende Vorspannungsabfall wesentlich geringer und liegt der nahezu horizontal und flach verlaufende Abschnitt über die gesamte dargestellte Betriebszeit t des Keilriemens wesentlich höher als bei dem Keilriemen gemäß Kurve 10. Der Grenzwert g, der ein Nachspannen des Keilriemens erforderlich macht, wird erst zu einem wesentlich späteren, nicht dargestellten Zeitpunkt erreicht.

Die in Fig. 2 dargestellte Einlaufvorrichtung 14 setzt sich im wesentlichen aus einem Gestell 16 mit mehreren Verstrebungen 18, 20, 22, 24, einer Antriebsmaschine 26 in Form eines Elektromotors, einer auf der Welle 28 des Elektromotors befestigten ersten Riemenscheibe 30, einer zweiten Riemenscheibe 32 und einer Spannvorrichtung 34 zusammen. Der Elektromotor 26 ist an den Verstrebungen 24 des Gestelles 16 befestigt. Er ist über einen nicht dargestellten Ein- Aus-Schalter an eine Stromquelle angeschlossen. Die Riemenscheibe 32 ist drehbar auf einem doppelarmigen Spannhebel 36 gelagert. Der Spannhebel 36 wiederum ist über einen Bolzen 38 verschwenkbar an der Strebe 20 angelenkt. An seinem freien Arm 40 greift die Stellstange 42 eines hydraulischen Stellzylinders 44 an. Der Stellsylinder 44 ist an dem Gestell 16 befestigt und weist einen mit der Stellstange 42 verbundenen Betätigungskolben 46 auf. Innerhalb des Stellzylinders 44 ist ferner eine Schraubendruckfeder 48 vorgesehen, die eine Rückstellung des Spannhebels 36 der fluidbetätigten Spannvorrichtung 34 bewirkt.

Es versteht sich, daß die Drehlagerungen der Riemenscheiben 30,32 achsparallel und in einer gemeinsamen Umfangsebene angeordnet sind. Der hydraulische Stellzylinder 44 ist über eine Leitung 50 und über ein nicht dargestelltes hydraulisches Schaltventil an eine nicht dargestellte Druckmittelquelle angeschlossen. Im unbetätigten Zustand sind die beiden Drehachsen 28,52 der Riemenscheiben 30,32 einander derart nahe, daß der zu betreibende Keilriemen 54 ohne weiteres auf die Riemenscheiben 30,32 aufgelegt werden kann. Mit dem Einschalten des Elektromotores 26 wird zugleich das hydraulische Schaltventil angesteuert und über den hydraulischen Stellzylinder 44 der Spannhebels 36 im Uhrzeigersinn geschwenkt und durch entsprechende Drucksteuerung P auf den Stellzylinder 44 die gewünschte Vorspannung (z.B. Trumkraft 500 N) auf den Keilriemen 54 ausgeübt. Nach der gewünschten Einlaufzeit von 3 Minuten wird, gegebenenfalls auch automatisch, die Antriebsmaschine 26 abgeschaltet und über das hydraulische Schaltventil 50 der hydraulische Stellzylinder 44 druckentlastet. Dadurch stellt die Schraubendruckfeder 48 den Stellzylinder 44 wieder in seine eingefahrene Position, wobeinach Verschwenken des Spannhebels 36 im Gegenuhrzeigersinn der Keilriemen 54 wieder von der Einlaufvorrichtung 14 abnehmbar ist.

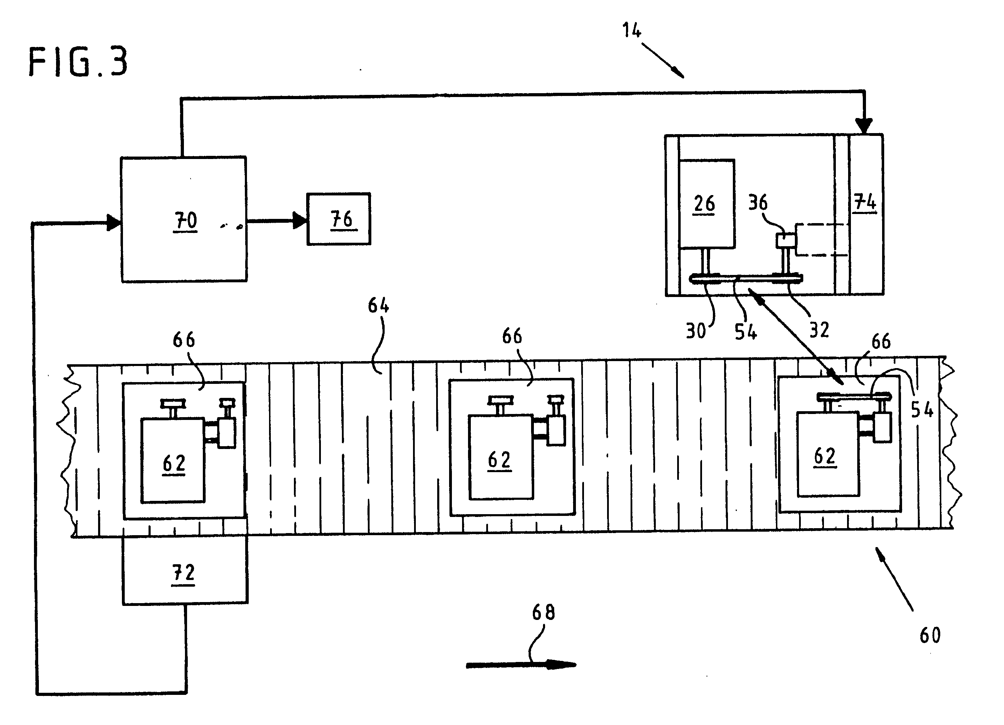

Die Fig. 3 zeigt abschnittsweise eine Montagelinie 60 für die Endmontage von Brennkraftmaschinen für Kraftfahrzeuge. Die Montagelinie besteht aus einer Transporteinrichtung 64, auf der auf einzelnen Montageböcken 66 die Brennkraftmaschinen 62 aufgespannt und in Richtung des Pfeiles 68 transportiert werden. Während dieses Transportes werden an den einzelnen Montagestellen die Brennkraftmaschinen und deren Zusatzaggregate montiert bzw. komplettiert. Die Montagelinie 60 ist mit einer elektronischen Fertigungssteuerung 70 verknüpft, in die wiederum über eine Codierungseinrichtung 72 der jeweils zu montierende Brennkraftmaschinentyp eingelesen wird. In die Montagelinie 60 integriert ist die Einlaufvorrichtung 14, die in der Nähe des Montageortes für die Montage des Keilriemens 54 an dem nicht näher dargestellten Riementrieb der Brennkraftmaschine angeordnet ist. Das Steuerteil 74 der Einlaufvorrichtung 14 ist mit der Fertigungssteuerung 70 und mit einer Anzeigeeinheit 76 verknüpft. Der Montageablauf ist wie folgt :

Über die Codierungseinrichtung 72 wird in die Fertigungssteuerung 70 eingelesen, welcher Brennkraftmaschinentyp zur Montage ansteht und welcher Keilriemen 54 dabei zu verbauen ist. Dieser Keilriemen 54 wird in der entsprechenden Reihenfolge über die Anzeigeeinheit 76 angezeigt und kann dementsprechend von einer hierfür zuständigen Person in die Einlaufvorrichtung 14 eingelegt werden. Nach einem Startsignal von der einlegenden Person wird die Einlaufvorrichtung gestartet, wobei die entsprechenden Paramter wie Vorspannung, Einlaufzeit ect. von der Fertigungssteuerung 70 vorgegeben bzw. gesteuert werden.

Nach dem entsprechenden Einlaufvorgang kann der den Riemen 54 montierende Werker diesen von der Einlaufvorrichtung 14 abnehmen und unmittelbar (ca. innerhalb von 10 min) an der inzwischen am Montageort angelangten Brennkraftmaschine 62 entsprechend montieren. Gegebenenfalls könnte jedoch auch das Auflegen und Abnehmen des Keilriemens 54 an der Einlaufvorrichtung 14 automatisiert sein.

der Riementrieb kann beispielsweise wie in der DE-C-30 39 215 beschrieben ausgebildet sein, wobei nach dem Spannen des Riemens 54 die Spannvorrichtung festgestellt bzw. blockiert wird. Die Spannvorrichtung kann jedoch auch jede andere mögliche Konstruktion aufweisen ; sie bildet nicht den Gegenstand der vorliegenden Erfindung und ist deshalb auch nicht beschrieben.

Die Erfindung ist nicht auf das gezeigte Ausführungsbeispiel mit einem Keilriemen und für einen Riementrieb an einer Brennkraftmaschine beschränkt. Anstelle von Keilriemen jeglicher Bauart können auch Flachriemen, Zahnriemen etc. mit einer entsprechend ausgebildeten Einlaufvorrichtung vor deren Erstmontage betrieben werden. Gegebenenfalls können dabei auch andere als die angegebenen Parameter zur Einlaufzeit, Vorspannung, Drehzahl oder Riemenscheibendurchmessern zweckmäßig sein. Die Vorspannung kann anstelle der Hydraulik auch durch eine entsprechende Druckluftquelle oder durch Gewichtsbelastung erzeugt werden.

**Ansprüche**

1. Verfahren zum Spannungsstabilisieren und Montieren von Riemen an Riementrieben, insbesondere von Keilriemen zum Antrieb von Zusatzaggregaten an Brennkraftmaschinen, wobei der Riemen mittels einer feststellbaren Spannvorrichtung gespannt wird, **dadurch gekennzeichnet,** daß der Riemen unmittelbar vor dessen Montage am Riementrieb in einer rotierenden Einlaufvorrichtung mit einer definierten Vorspannung über einen definierten Zeitraum betrieben wird, und daß der Riemen nach dem Entnehmen aus der Einlaufvorrichtung im "warmen" Zustand montiert wird.

2. Verfahren nach den Ansprüch 1, **dadurch gekennzeichnet,** daß der Riemen ca. 3-5 Minuten mit der bei der bisherigen, herkömmlichen Erstmontage vorgenommen Vorspannung betrieben wird.

3. Verfahren nach den Ansprüchen 1-2, **dadurch gekennzeichnet,** daß die Vorspannung konstant über die Zeit gehalten wird.

4. Verfahren nach den Ansprüchen 1-3, **dadurch gekennzeichnet,** daß der Riemen bei einer Drehzahl $n \approx 1000\text{-}2000$ min.$^{-1}$ der Riemenscheiben und mit Riemenscheibendurchmessern > 60 mm betrieben wird.

5. Verfahren nach einem oder mehreren der vorhergehenden Ansprüche, **dadurch gekennzeichnet,** daß die Einlaufvorrichtung (14) in eine Montagelinie (60) für Brennkraftmaschinen integriert und mit der dortigen Fertigungssteuerung (70) logisch verknüpft wird ;

daß die ggf. unterschiedlichen Riemen (54) in der benötigten Montagefolge zugeführt und betrieben werden ; und

daß die Riemen anschließend unmittelbar dem Montageort des Riementriebes an der Brennkraftmaschine zugeführt werden.

6. Vorrichtung zur Durchführung des Verfahren nach den vorhergehenden Ansprüchen, gekennzeichnet durch eine Einlaufvorrichtung (14), welche in eine Montage linie (60) für Brennkraftmaschinen integriert und mit der dortigen Fertigungssteuerung logisch verknüpft ist und die eine Antriebsmaschine (26) zum Antrieb einer ersten Riemenscheibe (30), eine zweite drehbar gelagerte Riemenscheibe (32) und eine Spannvorrichtung (34) zum Vorspannen des Riemens (54) enthält.

7. Vorrichtung nach Anspruch 6, **dadurch gekennzeichnet,** daß die Spannvorrichtung (34) unmittelbar auf die zweite Riemenscheibe (32) wirkt, deren Lagerung relativ zu der mit der Antriebsmaschine (26) verbundenen Riemenscheibe (30) beweglich ausgeführt ist.

8. Vorrichtung nach den Ansprüchen 6 und 7, **dadurch gekennzeichnet,** daß die Spannvorrichtung (14) fluidbetätigt ist.

**Claims**

1. Method of stabilising the preload of belts and fitting these to belt drives, especially V-belts for the driving of auxiliary apparatus in internal combustion engines, the belt being tensioned by means of a fixable tensioning apparatus, characterised in that directly before the belt is fitted to the belt drive the said belt is operated in a rotating running-in apparatus with a well-defined preload and over a well-defined period of time, and the belt is fitted in the "hot" state after removal from the running-in apparatus.

2. Method according to claim 1, characterised in that the belt is operated for about 3-5 minutes with the preload effected at the former conventional initial fitting.

3. Method according to claims 1-2, characterised in that the preload is kept constant over the time concerned.

4. Method according to claims 1-3, characterised in that the belt is operated at a rotational speed of $n \approx 1000\text{-}2000$ min$^{-1}$ for the belt pulleys and with belt pulley diameters > 60 mm.

5. Method according to one or more of the preceding claims, characterised in that the running-in apparatus(14) is integrated into an assembly line (60) for internal combustion engines and is linked logically with the production control unit (70) provided there ;

that the possibly differing belts (54) are fed-in and operated in the assembly sequence required ; and

that the belts are then fed directly to the assembly station for the belt drive on the internal combustion engine.

6. Apparatus for carrying out the method according to the preceding claims, characterised by a running-in apparatus (14) which is integrated into an assembly line (60) for internal combustion engines and is logically linked with the production control unit thereat, and which comprises a drive machine (26) for driving a first belt pulley (30), a second rotatably mounted belt pulley (32), and a tensioning apparatus (34) for preloading the belt (54).

7. Apparatus according to claim 6, characterised in that the tensioning apparatus (34) acts directly on the second belt pulley (32), whose bearing is made to be movable relatively to the belt pulley (30) which is connected to the drive machine (26).

8. Apparatus according to claims 6 and 7, characterised in that the tensioning apparatus (14) is fluid-operated.

## Revendications

1. Procédé pour la stabilisation de tension et le montage de courroies sur des transmissions à courroie, en particulier de courroies trapézoïdales pour l'entraînement de groupes auxiliaires adjoints à des moteurs à combustion interne, la courroie étant tendue au moyen d'un dispositif tendeur qui peut être bloqué, caractérisé en ce qu'immédiatement avant son montage sur la transmission à courroie, la courroie est mise en service avec une pré-tension définie et pendant une période définie dans un dispoSitif de rodage rotatif et en ce qu'elle est montée à l'état "chaud" après avoir été retirée du dispositif de rodage.

2. Procédé selon la revendication 1, caractérisé en ce que la courroie est mise en service pendant 3 à 5 mn environ avec la pré-tension qui lui était donnée précédemment lors du premier montage traditionnel.

3. Procédé selon la revendication 1 ou 2, caractérisé en ce que la pré-tension est maintenue constante pendant tout le temps.

4. Procédé selon l'une quelconque des revendications 1 à 3, caractérisé en ce que la courroie est mise en service à une vitesse de rotation n $\approx$ 1000-2000 mn$^{-1}$ des poulies et avec des diamètres > 60 mm des poulies.

5. Procédé selon l'une quelconque des revendications 1 à 4, caractérisé en ce que le dispositif de rodage (14) est intégré dans une chaîne de montage (60) pour moteurs à combustion interne et est relié logiquement à l'unité de commande de fabrication (70) de cette chaîne, en ce que les courroies (54) éventuellement différentes sont amenées et mises en service dans l'ordre de montage nécessaire, et en ce que les courroies sont ensuite amenées immédiatement au lieu de montage de la transmission à courroies sur le moteur à combustion interne.

6. Dispositif pour l'exécution du procédé selon l'une quelconque des revendications 1 à 5, carartérisé par un dispositif de rodage (14) qui est intégré dans une chaîne de montage (60) pour moteurs à combustion interne, est relié logiquement à l'unité de commande de fabrication (70) de cette chaîne et montrent un moteur d'entraînement (26) pour l'entraînement d'une première poulie (30), une seconde poulie (32) montée à rotation et un dispositif tendeur (34) pour donner une pré-tension à la courroie.

7. Dispositif selon la revendication 6, caractérisé en ce que le dispositif tendeur (34) agit directement sur la seconde poulie (32) dont le dispositif de montage est réalisé de façon à être mobile par rapport à la poulie (30) raccordée au moteur d'entraînement (26).

8. Dispositif selon la revendication 6 ou 7, caractérisé en ce que le dispositif tendeur (14) est actionné par fluide.

# FIG.1

N

m

12

10

g

u

t

# FIG.2

30 26 54 14

24

28 52 32

36

20 38 44

48 50

42 P

22 16 22 40 46 22

18 34

6

FIG.3